# DEMANDE DE BREVET EUROPEEN

(11) **EP 4 822 542 A1**
(43) Date de publication de la demande: **14.10.2026**
(21) Numéro de dépôt: 26168910.3
(22) Date de dépôt: 30.03.2026
(51) Int. Cl.: G06F 11/16

(54) **SYSTÈME ÉLECTRONIQUE**

(30) Priorité: 11.04.2025 FR 2503905
(71) Demandeur: STMicroelectronics International N.V., 1228 Plan-les-Ouates, Geneva (CH)
(72) Inventeur: HAIDARA, Cheick Ahmed Tidiani, 38000 GRENOBLE (FR)
(74) Mandataire: Cabinet Beaumont

(57) **Abrégé**

La présente description concerne un système comprenant un ensemble principal de circuits et un ensemble auxiliaire de circuits , les ensembles principal et auxiliaire comprenant les mêmes circuits, chaque circuit de l'ensemble principal étant configuré pour fournir au moins un signal de sortie destiné à être comparé à un signal de sortie équivalent généré par un circuit de l'ensemble auxiliaire, au moins un circuit de l'ensemble auxiliaire comprenant un bloc fonctionnel , équivalent à un bloc fonctionnel de l'ensemble principal, désactivé ;
ledit bloc fonctionnel désactivé ne participant pas à la génération des signaux de sortie de l'ensemble auxiliaire destinés à être comparés à des signaux de l'ensemble principal.

## Description

### Domaine technique

La présente description concerne de façon générale les systèmes électroniques, et en particulier les systèmes électroniques à structure dite de type "LOCKSTEP", c'est-dire à deux circuits de traitement identiques de mêmes données.

### Technique antérieure

Les systèmes de type "LOCKSTEP" sont des systèmes informatiques tolérants aux fautes dont des circuits identiques l'un à l'autre exécutent en parallèle le même ensemble d'opérations. La redondance permet de détecter et de corriger les erreurs. En effet, les résultats des opérations dupliquées peuvent être comparés pour déterminer s'il y a eu une erreur.

### Résumé de l'invention

Un mode de réalisation prévoit un système comprenant un ensemble principal de circuits et un ensemble auxiliaire de circuits, les ensembles principal et auxiliaire comprenant les mêmes circuits, chaque circuit de l'ensemble principal étant configuré pour fournir au moins un signal de sortie comparé à, ou destiné à être comparé à, un signal de sortie équivalent généré par un circuit de l'ensemble auxiliaire, au moins un circuit de l'ensemble auxiliaire comprenant un bloc fonctionnel, équivalent à un bloc fonctionnel de l'ensemble principal, désactivé ;
ledit bloc fonctionnel désactivé ne participant pas à la génération des signaux de sortie de l'ensemble auxiliaire, comparés à, ou destinés à être comparés à, des signaux de l'ensemble principal.

Selon un mode de réalisation, l'ensemble auxiliaire ne comprend aucun bloc fonctionnel ne participant pas à la génération des signaux de sortie de l'ensemble auxiliaire destinés à être comparés à des signaux de l'ensemble principal.

Selon un mode de réalisation, chaque ensemble de circuits est un sous-système à unité centrale de traitement.

Selon un mode de réalisation, chaque sous-système comprend un circuit formant une unité centrale de traitement, au moins un circuit de mémoire volatile, au moins un circuit de mémoire non volatile, une unité de gestion des mémoires, ou au moins un bus reliant les différents circuits et un circuit de décodage du bus.

Selon un mode de réalisation, chaque circuit de l'ensemble principal comprend au moins deux blocs fonctionnels.

Selon un mode de réalisation, au moins une entrée de l'ensemble auxiliaire, ne participant pas à la génération des signaux de sortie de l'ensemble auxiliaire destinés à être comparés à des signaux de l'ensemble principal, est maintenue à une valeur constante.

Selon un mode de réalisation, toutes les entrées de l'ensemble auxiliaire ne participant pas à la génération des signaux de sortie de l'ensemble auxiliaire destinés à être comparés à des signaux de l'ensemble principal sont maintenues à une valeur constante.

Selon un mode de réalisation, les circuits de l'ensemble principal sont situés les uns à côté des autres sur un circuit intégré et les circuits de l'ensemble auxiliaire sont situés les uns à côté des autres sur ledit circuit intégré.

Selon un mode de réalisation, la distance minimale entre un circuit de l'ensemble principal et le circuit équivalent de l'ensemble auxiliaire est de 50 µm.

Selon un mode de réalisation, la distance minimale entre les circuits de l'ensemble principal et les circuits de l'ensemble auxiliaire est de 50 µm.

Selon un mode de réalisation, l'ensemble principal comprend un premier et un deuxième multiplexeurs, et l'ensemble auxiliaire comprend un troisième et un quatrième multiplexeurs ;
une sortie du premier multiplexeur étant reliée à une première entrée du deuxième multiplexeur et à une première entrée du quatrième multiplexeur ;
une sortie du deuxième multiplexeur étant reliée à au moins un circuit de l'ensemble principal ;
une sortie du quatrième multiplexeur étant reliée à au moins un circuit de l'ensemble auxiliaire ;
une deuxième entrée du quatrième multiplexeur étant reliée à une sortie du troisième multiplexeur ;
le deuxième multiplexeur étant commandé par un premier signal, et le quatrième multiplexeur étant commandé par un deuxième signal, les premiers et deuxièmes signaux étant configurés pour avoir des états complémentaires ;
la première entrée du deuxième multiplexeur étant sélectionnée lorsque le premier signal est dans un premier état ;
la première entrée du quatrième multiplexeur étant sélectionnée lorsque le deuxième signal est dans un deuxième état complémentaire du premier état.

Selon un mode de réalisation, des entrées du troisième multiplexeur sont configurées pour recevoir une valeur constante.

Selon un mode de réalisation, des entrées du premier multiplexeur sont reliées à des périphériques du système reliés à au moins un des circuits de l'ensemble principal.

Selon un mode de réalisation, les circuits de l'ensemble principal comprennent des blocs fonctionnels, et les circuits de l'ensemble auxiliaire comprennent des blocs fonctionnels équivalents à ceux de l'ensemble principal ;
au moins un premier bloc fonctionnel d'un des circuits de l'ensemble principal ayant une sortie reliée à une première entrée d'un cinquième multiplexeur de l'ensemble principal et à une première entrée d'un sixième multiplexeur de l'ensemble auxiliaire ;
la première entrée du cinquième multiplexeur étant sélectionnée lorsqu'un troisième signal est dans un premier état ;
la première entrée du sixième multiplexeur étant sélectionnée lorsqu'un quatrième signal est dans un deuxième état, complémentaire du premier état.

Selon un mode de réalisation, une deuxième entrée du sixième multiplexeur est sélectionnée lorsque le quatrième signal est dans le premier état ;
un deuxième bloc fonctionnel de l'ensemble auxiliaire, équivalent au premier bloc fonctionnel, étant désactivé.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 représente un exemple de système de type "LOCKSTEP" ;
la figure 2 illustre un mode de réalisation d'un système de type "LOCKSTEP" ;
la figure 3 illustre un autre mode de réalisation d'un système de type "LOCKSTEP" ; et
la figure 4 illustre un mode de réalisation d'un système de type "LOCKSTEP".

### Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés.

Sauf précision contraire, lorsque l'on fait référence à deux éléments connectés entre eux, cela signifie directement connectés sans éléments intermédiaires autres que des conducteurs, et lorsque l'on fait référence à deux éléments reliés (en anglais « coupled ») entre eux, cela signifie que ces deux éléments peuvent être connectés ou être reliés par l'intermédiaire d'un ou plusieurs autres éléments.

Dans la description qui suit, lorsque l'on fait référence à des qualificatifs de position absolue, tels que les termes « avant », « arrière », « haut », « bas », « gauche », « droite », etc., ou relative, tels que les termes « dessus », « dessous », « supérieur », « inférieur », etc., ou à des qualificatifs d'orientation, tels que les termes « horizontal », « vertical », etc., il est fait référence, sauf précision contraire, à l'orientation des figures.

Sauf précision contraire, les expressions « environ », « approximativement », « sensiblement », et « de l'ordre de » signifient à 10 % ou à 10° près, de préférence à 5 % ou à 5° près.

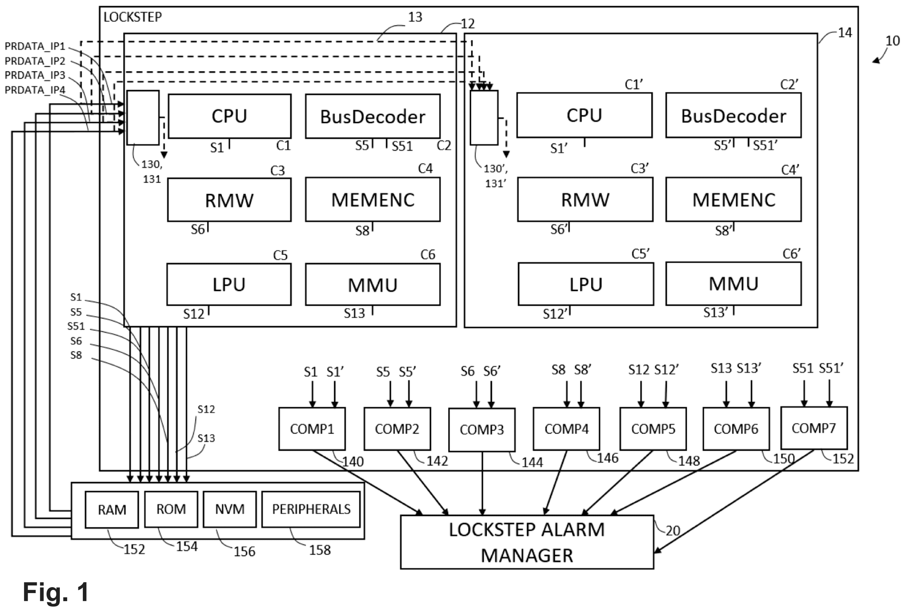

La figure 1 représente un exemple de système 10 de type "LOCKSTEP".

Le système 10 est par exemple intégré dans un microcontrôleur ou un système sur puce. Le système 10 comprend par exemple un module non illustré de communication sans fil.

Le système 10 comprend deux ensembles de circuits 12 et 14. Les deux ensembles 12 et 14 forment par exemple des cœurs semblables du système 10 travaillant en parallèle sur de mêmes opérations pour en vérifier le bon fonctionnement.

Les ensembles 12 et 14 reçoivent par exemple les mêmes conditions externes comme la fréquence de fonctionnement, les mêmes signaux d'horloge ou de transaction, ou encore les mêmes signaux d'interruption.

L'ensemble 12 correspond par exemple à un ensemble principal (main en anglais) de circuits C1 (CPU), C2 (BusDecoder), C3 (RMW), C4 (MEMENC), C5 (LPU), C6 (MMU), 130, 131 représentés sous formes de blocs fonctionnels. L'ensemble 12 correspond aux circuits dont les opérations participent au fonctionnement du système 10. Ainsi, l'ensemble 12 reçoit des entrées, non représentées, et fournit des sorties. Dans l'exemple de la figure 1, l'ensemble 12 fournit par exemple des sorties S1, S5, S51, S6, S8, S12, S13, dont l'état est comparé aux sorties correspondantes, ou équivalentes, de l'ensemble 14. Les sorties de l'ensemble 12 sont destinées à être utilisées par des circuits 152 (RAM), 154 (ROM), 156 (NVM), 158 (PERIPHERALS) du système 10. Les circuits 152 (RAM), 154 (ROM), 156 (NVM), 158 (PERIPHERALS) correspondent respectivement à des circuits associés à une ou plusieurs mémoires volatiles par exemple de type RAM, à des circuits associés à une ou plusieurs mémoires statiques ou mortes par exemple de type ROM, à des circuits associés à une ou plusieurs mémoires non-volatiles (non volatile memory, NVM, en anglais) par exemple de type à changement de phase, et à des circuits périphériques comme par exemple des circuits liés à des protocoles de bus comme les protocoles AHB, APB ou AXI.

L'ensemble 14 correspond à un ensemble auxiliaire, ou redondant, de circuits, autrement appelé par le terme réplique (replica en anglais). L'ensemble 14 comprend par exemple les mêmes circuits que l'ensemble 12. Autrement dit, l'ensemble 14 a par exemple une conception ou une architecture, au sens du protocole de conception RTL (register level transfer), qui est la même que celle de l'ensemble 12. Dans un exemple, les opérations réalisées par l'ensemble 14 forment une réplique des opérations réalisées dans l'ensemble 12 mais elles ne participent pas au fonctionnement effectif du système 10, autre que pour vérifier, par comparaison, le fonctionnement de l'ensemble 12. Ainsi, l'ensemble 14 reçoit les mêmes commandes, non représentées, que l'ensemble 12 et fournit des sorties S1', S5', S51', S6', S8', S12', S13' configurées pour être comparées avec les sorties S1, S5, S51, S6, S8, S12, S13 de l'ensemble 12.

Dans l'exemple de la figure 1, l'ensemble 14 comprend des circuits C1', C2', C3', C4', C5', C6' qui sont les circuits équivalents ou répliques des circuits C1, C2, C3, C4, C5, C6 de l'ensemble 12. Les circuits C1 à C6, et C1' à C6' correspondent respectivement par exemple à : une unité de calcul ou processeur (CPU), un protocole de bus (BusDecoder) par exemple une matrice de bus (bus matrix en anglais) dédié au fonctionnement de protocoles de bus AHB, APB ou AXI ; une unité de traduction d'octets (Read Modify Write, RWM, en anglais) qui traduit des octets ou demi-mots d'accès en écriture en mots d'accès de 32 bits pour la detection d'erreur de code ; un circuit d'encryptage et de cryptage (MEMENC) ; une unité de protection de librairie (Library protection Unit, LPU, en anglais) configurée pour protéger un accès au code ou à des données volatiles ou non-volatiles depuis le reste du système 10, et une unité de contrôle de mémoires (Memory Management Unit, MMU, en anglais). L'ensemble 14 comprend des circuits C1' à C6', correspondant respectivement aux circuits C1 à C6 de l'ensemble 12.

Dans un exemple non illustré, le type ou les fonctions des circuits des ensembles 12 et 14 est différent de ceux présentés en exemple. Leur nombre peut également être différent de celui représenté.

Les circuits 130, 131 de l'ensemble 12 et 130', 131' de l'ensemble 14 sont par exemple des circuits de sélection parmi des signaux PRDATA_IP1, PRDATA_IP2, PRDATA_IP3, PRDATA_IP4, provenant par exemple des circuits 152, 154, 156, 158. Les signaux PRDATA_IP1, PRDATA_IP2, PRDATA_IP3, PRDATA_IP4, sont par exemple des réponses à des transactions envoyées par l'ensemble 12. Dans un exemple, les signaux PRDATA_IP1, PRDATA_IP2, PRDATA_IP3, PRDATA_IP4, forment des entrées des ensembles 12 et 14.

Dans un exemple, les signaux PRDATA_IP1, PRDATA_IP2, PRDATA_IP3, PRDATA_IP4, sont également accompagnés ou remplacés par des signaux de protocoles de poignée de main par exemple des signaux de type READY/VALID.

Dans un exemple non illustré le nombre de signaux en entrée des circuits de sélection 130, 131, 130', 131' est entre 1 et 4 ou supérieur à quatre.

Dans l'exemple illustré, les signaux PRDATA_IP1, PRDATA_IP2, PRDATA_IP3, PRDATA_IP4, sont également dirigés, via des lignes conductrices 13 vers les circuits 130' ou 131' de l'ensemble 14 pour être sélectionnés.

Les circuits de sélection 130, 131, 130', 131' sont par exemple des multiplexeurs. Leur fonction est par exemple de sélectionner, en fonction de l'état d'un signal de sélection, un parmi plusieurs signaux d'entrée (par exemple les signaux PRDATA_IP1, PRDATA_IP2, PRDATA_IP3, PRDATA_IP4).

Le signal sélectionné est par exemple utilisé par l'un ou plusieurs des circuits C1 à C6, et C1' à C6'.

Dans un exemple, les ensembles 12 et 14 reçoivent de des signaux d'entrée non illustrés qui sont par exemple sélectionnés par des circuits de sélection des ensembles 12 et 14.

Les sorties S1, S5, S51, S6, S8, S12, S13, des circuits C1 à C6 de l'ensemble 12 fournissent par exemple au moins une sortie configurée pour être comparée à une sortie équivalente de l'ensemble 14. Dans l'exemple de la figure 1, le circuit C1 génère la sortie S1, le circuit C2 génère les sorties S5, S51, le circuit C3 génère la sortie S6, le circuit C4 génère la sortie S8, le circuit C5 génère la sortie S12, et le circuit C6 génère la sortie S13. Les sorties S1, S5, S51 S6, S8, S12 et S13 sont ainsi configurées pour être comparées à des sorties de l'ensemble 14. D'autres sorties, non représentées de l'ensemble 12, ne sont par exemple pas destinées à être comparées à des sorties de l'ensemble 14.

Les circuits C1' à C6' de l'ensemble 14 fournissent au moins les sorties correspondant aux sorties de l'ensemble 12 configurées pour être comparées à des sorties de l'ensemble 14. Ainsi, dans l'exemple de la figure 1, le circuit C1' génère la sortie S1' destinée à être comparée à la sortie S1, le circuit C2' génère les sorties S5' et S51' destinées à être comparées aux sorties S5 et S51, le circuit C3' génère une sortie S6' destinée à être comparée à la sortie S6, le circuit C4' génère une sortie S8' destinée à être comparée à la sortie S8, le circuit C5' génère une sortie S12' destinée à être comparée à la sortie S12, et le circuit C6' génère une sortie S13' destinée à être comparée à la sortie S13.

Dans un exemple, certains ou l'ensemble des signaux présents sur les sorties S1, S5, S51, S6, S8, S12, S13, S1', S5', S51', S6', S8', S12', S13', sont par exemple des signaux d'accès mémoire, par exemple aux mémoires 152, 154 ou 156. Dans un exemple, des signaux utilisés dans l'architecture ARM^{®}: HADDR, HTRANS, HPROT, HSIZE, HWRITE, HWDATA sont présents sur les sorties S1, S5, S51, S6, S8, S12, S13, S1', S5', S51', S6', S8', S12', S13'. Le nombre de sorties sera adapté par la personne du métier au nombre de types de signal différents à comparer dans le cadre de l'architecture « LOCKSTEP ».

Dans un exemple, certains ou l'ensemble des signaux présents sur les sorties S1, S5, S51, S6, S8, S12, S13, S1', S5', S51', S6', S8', S12', S13', sont par exemple des signaux liés à la sécurité ou à la cryptographie, ou des signaux de sélection d'emplacement mémoire. Dans un exemple, des signaux utilisés dans l'architecture ARM^{®}: HSEL, HSEL_NVM, HSEL_RAM, HSEL_NESRAM, HSEL_ROM, HADDR_ENCR, HADDR_SCR_DATA, HADDR_SCR_CODE, HADDR_EDC_32, HADDR_EDC_64 sont présents sur les sorties S1, S5, S51, S6, S8, S12, S13, S1', S5', S51', S6', S8', S12', S13'.

Le système 10 comprend en outre un ou plusieurs circuits de comparaison 140 (COMP1), 142 (COMP2), 144 (COMP3), 146 (COMP4), 148 (COMP5), 150 (COMP6), 152 (COMP7), qui sont par exemple des circuits comparateurs, configurés chacun pour comparer respectivement l'état d'une des sorties S1, S5, S51 S6, S8, S12 et S13 de l'ensemble 12 à l'état de la sortie équivalente de l'ensemble 14. Dans l'exemple de la figure 1, le système 10 comprend autant de circuits de comparaison que de sorties de l'ensemble 12 destinées à être comparées à des sorties de l'ensemble 14. Ainsi, dans l'exemple de la figure 1, le système 10 comprend un circuit 140 (COMP1) configuré pour comparer les sorties S1 et S1', un circuit 142 (COMP2) configuré pour comparer les sorties S5 et S5', un circuit 144 (COMP3) configuré pour comparer les sorties S6 et S6', un circuit 146 (COMP4) configuré pour comparer les sorties S8 et S8', un circuit 148 (COMP4) configuré pour comparer les sorties S12 et S12' (COMP5), un circuit 150 (COMP6) configuré pour comparer les sorties S13 et S13', et un circuit 152 (COMP7) configuré pour comparer les sorties S51 et S51'.

Les circuits 140, 142, 144, 146, 148, 150, 152 génèrent un signal d'alarme respectif lorsque qu'une des sorties (ou l'état de sortie) S1, S5, S51, S6, S8, S12, S13, de l'ensemble 12 est différente de la sortie correspondante S1', S5', S51', S6', S8', S12', S13' de l'ensemble 14. Les signaux d'alarme sont par exemple fournis à un circuit 20 (LOCKSTEP ALARM MANAGER) configuré pour déterminer la réponse du système 10 à apporter en cas de réception d'un signal d'alarme issu de la détection d'une différence entre les signaux de sortie de l'ensemble 12 et de l'ensemble 14. Dans un exemple, le circuit 20 est par exemple configuré pour bloquer les accès mémoires, ou générer une alarme système, éteindre le système 10, ou redémarrer le système 10, en cas de différences entre au moins l'une des sorties de l'ensemble 12 et les sorties correspondantes de l'ensemble 14.

Dans un exemple non-illustré, les circuits de comparaison 140, 142, 144, 146, 148, 150, 152 sont dédoublés voir triplés afin de créer de la redondance et s'assurer que les signaux d'alarmes ne soient pas mis à zéro volontairement pour masquer des alertes dans le cas d'attaques.

Les ensembles 12, 14 et les circuits de comparaison 140 à 152 forment une architecture de type "LOCKSTEP". Ce système est par exemple utilisé dans les applications bancaires, d'authentification, ou de sécurité.

L'architecture de type "LOCKSTEP" illustrée sur la figure 1 constitue un poste de consommation d'énergie important du système 10 qui peut représenter par exemple un tiers de la consommation globale d'énergie.

Les circuits de sélection 130, 131, 130, 131 constituent une part non négligeable de cette consommation.

L'architecture de type "LOCKSTEP" illustrée sur la figure 1 prend également une place importante sur le substrat dans laquelle elle est fabriquée.

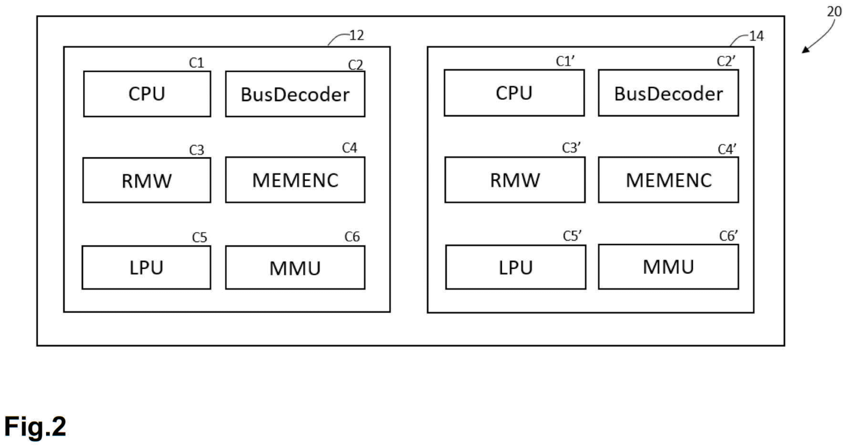

Les modes de réalisation illustrés dans les figures 2 à 4 prévoient de pallier tout ou partie des problématiques soulevées par le système illustré en figure 1.

La figure 2 illustre un mode de réalisation d'un système 20 de type "LOCKSTEP". Plus précisément, la figure 2 illustre schématiquement l'agencement du système 20.

Le système 20 comprend par exemple les éléments du système de type LOCKSTEP de la figure 1. Ainsi, le système 20 comprend les ensembles 12 et 14 et les circuits C1 à C6 et C1' à C6' de la figure 1. Le système 20 comprend en outre par exemple les circuits 140, 142, 144, 146, 148, 150, 152, non représentés en figure 2.

Les circuits C1 à C6 de l'ensemble 12 sont par exemple situés sur un même substrat, par exemple un même circuit intégré. De même, les circuits C1' à C6' sont situés sur un même circuit intégré, par exemple le même circuit intégré que celui de l'ensemble 12. De préférence, les circuits des ensembles 12 et 14 sont situés sur un même circuit intégré.

Les circuits C1 à C6 et C1' à C6' de la figure 2 sont représentés par des blocs. Le placement des blocs représentants les circuits C1 à C6 et C1' à C6' indique leur positionnement sur un circuit intégré. Ainsi, les circuits C1 à C6 sont, dans le mode de réalisation de la figure 2, placés les uns à côtés des autres. De préférence, seuls les circuits faisant partie de l'ensemble 12 sont agencés dans l'espace physique représenté par les circuits C1 à C6. De préférence, seuls les circuits faisant partie de l'ensemble 14 sont agencés dans l'espace physique représenté par les circuits C'1 à C'6. En particulier, aucun des circuits C1' à C6' n'est situé sur l'espace physique pris par les circuits C1 à C6, et inversement.

De préférence, la distance minimale entre deux circuits équivalents, C1 et C1' ou C2 et C2' etc, des ensembles 12 et 14, est de 50 µm. De manière plus générale, la distance minimale entre un circuit de l'ensemble 12 et un circuit de l'ensemble 14 est de préférence 50 µm.

Les circuits de l'ensemble 12 peuvent être séparés des circuits de l'ensemble 14 par d'autres circuits ou composants, par exemple par d'autre circuits du système 20. Par exemple, les circuits 140, 142, 144, 146, 148, 150, 152, de comparaison sont par exemple situés entre les circuits de l'ensemble 12 et les circuits de l'ensemble 14.

L'agencement des circuits de l'ensemble 12 peut être différent de l'agencement des circuits de l'ensemble 14. Ainsi, les circuits de l'ensemble 14 peuvent être séparés les uns des autres de distances différentes des distances séparant les circuits de l'ensemble 12.

Un avantage du mode de réalisation de la figure 2 est que les liaisons, par exemple filaires, entre les différents circuits d'un même ensemble sont plus courtes et ne sont pas perturbées par les liaisons de l'autre ensemble. De telles liaisons plus courtes assurent une consommation inférieure du système.

Un autre avantage du mode de réalisation de la figure 2 est que la séparation des circuits des deux ensembles assure qu'une attaque sur un des ensembles ne cause pas de modification à l'autre ensemble et assure donc que l'attaque pourra être repérée par son impact sur l'un des circuits.

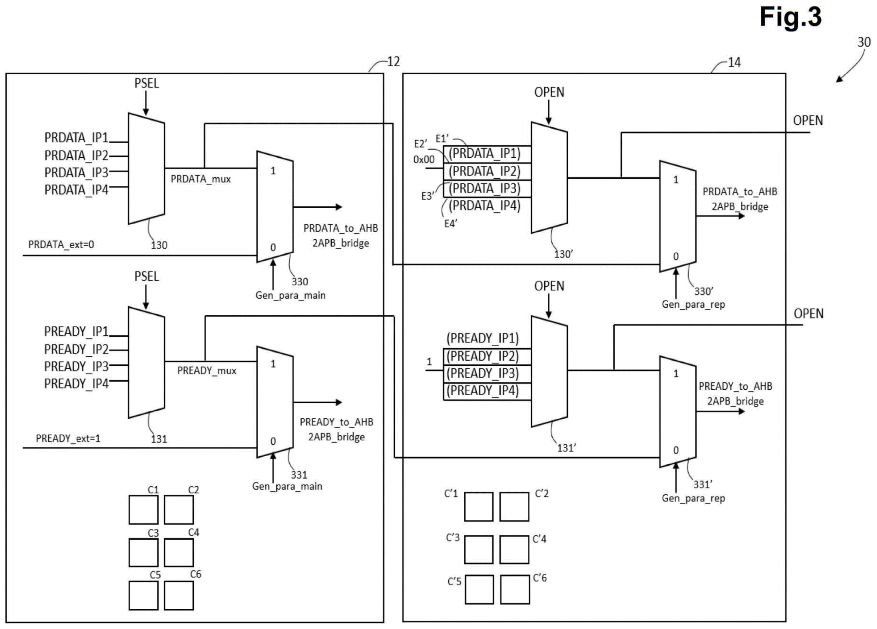

La figure 3 illustre un autre mode de réalisation d'un système 30 de type "LOCKSTEP".

Le système 30 comprend les éléments du système 10 de la figure 1 à l'exception des lignes conductrices 13 qui sont absentes dans cet exemple. Ainsi, le système 30 comprend les ensembles 12 et 14 avec les circuits C1 à C6 et C1' à C6'. Le système 30 comprend en outre les circuits 140, 142, 144, 146, 148, 150, 152 ainsi que les périphériques 152, 154, 156, 158 qui ne sont ici pas illustrés.

La figure 3 illustre en outre les circuits de sélection 130, 131, 130' et 131'.

Les circuits 130, 131, 130' et 131' sont, dans l'exemple illustré, des multiplexeurs.

Le multiplexeur 130 reçoit en entrée les signaux PRDATA_IP1, PRDATA_IP2, PRDATA_IP3 et PRDATA_IP4 qui proviennent par exemple des périphériques 152, 154, 156, 158 suite à une ou des transactions mises en œuvre par un ou plusieurs des circuits C1, C2, C3, C4, C5 ou C6. Le multiplexeur 130 est contrôlé par un signal PSEL par exemple issu du circuit C1. La sortie du multiplexeur 130 (signal PRDATA_mux) est reliée, préférentiellement connectée, à une entrée nommée « 1 » d'un multiplexeur 330 de l'ensemble 12 et à une entrée nommée « 0 » d'un multiplexeur 330' de l'ensemble 14 qui est un circuit équivalent au multiplexeur 330.

Dans l'exemple illustré, le multiplexeur 330 est commandé par l'état d'un signal Gen_para_main et le multiplexeur 330' est commandé par l'état d'un signal Gen_para_rep. L'état du signal Gen_para_main est donné par un paramètre, par exemple programmé, de l'ensemble 12 et qui est 1 par exemple. L'état du signal Gen_para_rep est donné par un paramètre, par exemple programmé, de l'ensemble 14 et qui est différent de Gen_para_main, soit ici Gen_para_rep=0. Dans un exemple, les états des signaux Gen_para_rep et Gen_para_main sont complémentaires, lorsque Gen_para_rep est à 0, Gen_para_main est à 1.

Le multiplexeur 330 a une deuxième entrée nommée « 0 » qui reçoit un signal appelé PRDATA_ext=0 qui est mis à zéro. Ainsi, lorsque le signal Gen_para_main est à 1, l'entrée « 1 » du multiplexeur 330 est sélectionnée, et lorsque Gen_para_main est à 0, l'entrée « 0 » du multiplexeur 330 est sélectionnée.

Le signal sélectionné en sortie du multiplexeur 330 est nommé PRDATA_to_AHB2APB_bridge et est par exemple utilisé par un ou plusieurs des circuits C1' à C6'.

Le multiplexeur 330' a une entrée nommée « 1 » qui est reliée à une sortie du multiplexeur 130'. Ainsi, lorsque le signal Gen_para_rep est à 0, l'entrée « 0 » du multiplexeur 330' est sélectionnée, et lorsque Gen_para_rep est à 1, l'entrée « 1 » du multiplexeur 330' est sélectionnée.

La sortie du multiplexeur 130 étant reliée à l'entrée « 0 » du multiplexeur 330', la sortie du multiplexeur 330' PRDATA_to_AHB2APB_bridge est, en fonctionnement normal, la même que la sortie du multiplexeur 130 et est reliée par exemple à un ou plusieurs des circuits C1' à C6'.

Dans l'exemple illustré, la sortie du multiplexeur 130 ayant déjà été sélectionnée dans l'ensemble 12 et reliée à l'entrée 0 du multiplexeur 330', il n'y a plus besoin de faire fonctionner le multiplexeur 130'. Ainsi, au contraire de l'exemple de la figure 1, les entrées du multiplexeur 130' ne sont pas reliées aux entrées du multiplexeur 130. Les lignes amenant les signaux PRDATA_IP1, PRDATA_IP2, PRDATA_IP3, et PRDATA_IP4 au multiplexeur 130' dans la figure 1 sont cette fois absentes dans la figure 3. Dans la figure 3, les entrées du multiplexeur 130' sont notées entre parenthèse (PRDATA_IP1), (PRDATA_IP2), (PRDATA_IP3), (PRDATA_IP4) pour signifier l'absence de lignes amenant les signaux PRDATA_IP1, PRDATA_IP2, PRDATA_IP3, et PRDATA_IP4 au multiplexeur 130'.

En d'autres termes, dans la figure 3, les entrées du multiplexeur 130' ne servent pas pour le fonctionnement d'un des circuits C1' à C6' et donc ne servent pas in fine à la comparaison de fonctionnement entre les ensembles 12 et 14 avec un des circuits 140, 142, 144, 146, 148, 150, 152.

Le fait d'introduire, par rapport à l'exemple de la figure 1, les multiplexeurs 330 et 330' qui sont commandés de façon opposée (Gen_para_rep=0 quand Gen_para_main=1) et de relier la sortie du multiplexeur 130 à une entrée du multiplexeur 330' qui correspond à la valeur du paramètre Gen_para_rep=0, permet de se passer d'un fonctionnement actif du multiplexeur 130'. Le multiplexeur 130' devient ainsi transparent vis-à-vis des circuits 140, 142, 144, 146, 148, 150, 152. A la place des signaux PRDATA_IP1, PRDATA_IP2, PRDATA_IP3, et PRDATA_IP4, les entrées du multiplexeur 130' sont toutes mises à une valeur fixe qui est par exemple, comme dans la figure 3, une valeur nulle ou 0x00.

Autrement dit, au moins une entrée de l'ensemble 14 ne participant pas à la génération des signaux de sortie de l'ensemble 14 destinés à être comparés à des signaux de l'ensemble 12 est maintenue à une valeur constante (ici 0x00 ou 0 ou 1).

Le multiplexeur 130' n'ayant pas besoin d'être commandé puisque ses entrées sont identiques et que la sélection a déjà été faite au niveau du multiplexeur 130, sa borne de commande est laissée flottante (OPEN) ou fixe.

Le fait de ne pas avoir à relier les entrées du multiplexeur 130' aux entrées du multiplexeur 130 et d'appliquer une valeur fixe (ici 0x00) à toutes les entrées du multiplexeur 130' permet de sauvegarder de l'espace sur le substrat en supprimant les lignes reliant les entrées des multiplexeur 130 et 130'. En effet ces lignes sont configurées pour des signaux de 32 bits par exemple ce qui prend une place non négligeable sur le substrat. Cela permet également de limiter la consommation puisqu'il n'y a plus besoin d'actionner le multiplexeur 130'.

Le multiplexeur 131 reçoit en entrée les signaux PREADY_IP1, PREADY_IP2, PREADY_IP3 et PREADY_IP4 qui proviennent par exemple des périphériques 152, 154, 156, 158 suite à une ou des transactions mises en œuvre par un ou plusieurs des circuits C1, C2, C3, C4, C5 ou C6. Le multiplexeur 131 est contrôlé par un signal PSEL par exemple issu du circuit C1. La sortie du multiplexeur 131 (signal PREADY_mux) est reliée, préférentiellement connectée, à une entrée nommée « 1 » d'un multiplexeur 331 de l'ensemble 12 et à une entrée nommée « 0 » d'un multiplexeur 331' de l'ensemble 14 qui est un circuit équivalent au multiplexeur 331.

Dans l'exemple illustré, le multiplexeur 331 est commandé par l'état du signal Gen_para_main et le multiplexeur 331' est commandé par l'état du signal Gen_para_rep.

Le multiplexeur 331 a une deuxième entrée nommée « 0 » qui reçoit un signal appelé PREADY_ext=1 qui est mis à l'état haut ou 1. Ainsi, lorsque le signal Gen_para_main est à 1, l'entrée « 1 » du multiplexeur 331 est sélectionnée, et lorsque Gen_para_main est à 0, l'entrée « 0 » du multiplexeur 331 est sélectionnée.

Le signal sélectionné en sortie du multiplexeur 331 est nommé PREADY_to_AHB2APB_bridge et est par exemple utilisé par un ou plusieurs des circuits C1' à C6'.

Le multiplexeur 331' a une entrée nommée « 1 » qui est reliée à une sortie du multiplexeur 131'. Ainsi, lorsque le signal Gen_para_rep est à 0, l'entrée « 0 » du multiplexeur 331' est sélectionnée, et lorsque Gen_para_rep est à 1, l'entrée « 1 » du multiplexeur 331' est sélectionnée.

La sortie du multiplexeur 131 étant reliée à l'entrée « 0 » du multiplexeur 331', la sortie du multiplexeur 331' PREADY_to_AHB2APB_bridge est, en fonctionnement normal, la même que la sortie du multiplexeur 131 et est reliée par exemple à un ou plusieurs des circuits C1' à C6'.

Dans l'exemple illustré, la sortie du multiplexeur 131 ayant déjà été sélectionnée dans l'ensemble 12 et reliée à l'entrée 0 du multiplexeur 331', il n'y a plus besoin de faire fonctionner le multiplexeur 131'. Ainsi, les entrées du multiplexeur 131' ne sont pas reliées aux entrées du multiplexeur 131. Les lignes amenant les signaux PREADY_IP1, PREADY_IP2, PREADY_IP3, et PREADY_IP4 au multiplexeur 131' dans la figure 1 sont cette fois absentes dans la figure 3. Dans la figure 3, les entrées du multiplexeur 131' sont notées entre parenthèse (PREADY_IP1), (PREADY_IP2), (PREADY_IP3), (PREADY_IP4) pour signifier l'absence de lignes amenant les signaux PREADY_IP1, PREADY_IP2, PREADY_IP3, et PREADY_IP4 au multiplexeur 131'.

En d'autres termes, dans la figure 3, les entrées du multiplexeur 131' ne servent pas pour le fonctionnement d'un des circuits C1' à C6' et donc ne servent pas in fine à la comparaison de fonctionnement entre les ensembles 12 et 14 avec un des circuits 140, 142, 144, 146, 148, 150, 152.

Le fait d'introduire les multiplexeurs 331 et 331' qui sont commandés de façon opposée (Gen_para_rep=0 quand Gen_para_main=1) et de relier la sortie du multiplexeur 131 à une entrée du multiplexeur 331' qui correspond à la valeur du paramètre Gen_para_rep=0, permet de se passer d'un fonctionnement actif du multiplexeur 131'. Le multiplexeur 131' devient ainsi transparent vis-à-vis des circuits 140, 142, 144, 146, 148, 150, 152. A la place des signaux PREADY_IP1, PREADY_IP2, PREADY_IP3, et PREADY_IP4, les entrées du multiplexeur 131' sont toutes mises à une valeur fixe qui est par exemple, comme dans la figure 3, une valeur nulle ou 0x00. Le multiplexeur 131' n'ayant pas besoin d'être commandé puisque ses entrées sont identiques et que la sélection a déjà été faite au niveau du multiplexeur 131, sa borne de commande est laissée flottante (OPEN) ou fixe.

Le fait de ne pas avoir à relier les entrées du multiplexeur 131' aux entrées du multiplexeur 131 et d'appliquer une valeur fixe (ici état haut ou 1) à toutes les entrées du multiplexeur 131' permet de sauvegarder de l'espace sur le substrat en supprimant les lignes reliant les entrées des multiplexeurs 131 et 131'. En effet ces lignes sont configurées pour des signaux de 32 bits par exemple ce qui prend une place non négligeable sur le substrat. Cela permet également de limiter la consommation puisqu'il n'y a plus besoin d'actionner le multiplexeur 131'.

Dans l'exemple illustré, les sorties des multiplexeurs 130' et 131' n'ayant pas d'influence sur le fonctionnement des circuits C1' à C6', elles sont notées « OPEN ».

De façon plus générale et non-illustrée, l'ensemble 12 reçoit des entrées, le nombre d'entrées pouvant, en pratique, être quelconque. Ces entrées sont fournies aux circuits C1 à C6 de manière à générer les sorties S1, S5, S51, S6, S8, S12 et S13.

Comme il a été décrit avec les entrées des multiplexeurs 130' et 131', les entrées qui correspondent aux entrées de l'ensemble 12 ne sont pas toutes reliées à l'ensemble 14. En introduisant des multiplexeurs à deux entrées dans chaque ensemble, comme par exemple les multiplexeurs 330 et 331, ou les multiplexeurs 330' et 331', qui sont commandés chacun en fonction de paramètres de valeur différente (0 et 1), et en les reliant comme décrit dans les exemples ci-dessus, il est possible d'obtenir des entrées de l'ensemble 14 qui ne sont pas utilisées pour générer les sorties destinées à être comparées à des sorties de l'ensemble 12. Ces entrées de l'ensemble 14 sont ainsi mises à des valeurs constantes (par exemple 0 (0x00) ou la masse ou un état haut ou 1) sans que cela n'impacte le résultat des comparaisons des circuits 140, 142, 144, 146, 148, 150, 152.

Cela permet de sauvegarder de l'espace sur le substrat en supprimant des lignes conductrices. Cela permet également de limiter la consommation puisqu'il n'y a plus besoin d'actionner certains « gros » multiplexeurs de l'ensemble 14.

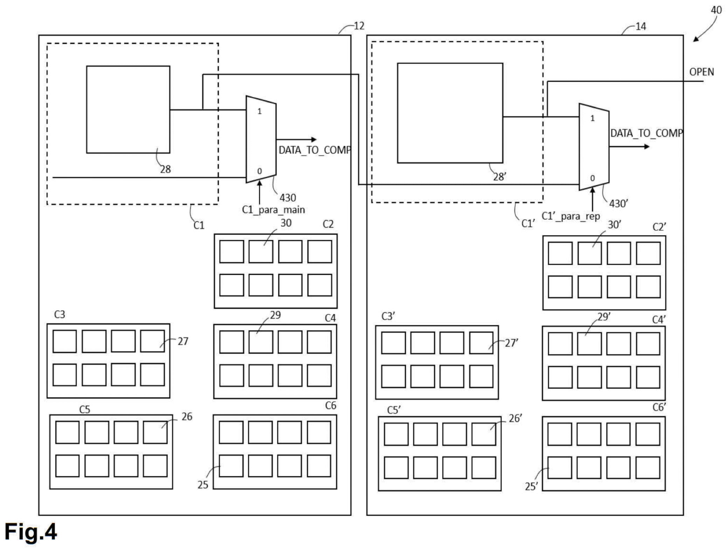

La figure 4 illustre un mode de réalisation d'un système 40 de type "LOCKSTEP". Plus précisément, la figure 4 illustre schématiquement une composition des circuits des ensembles 12 et 14.

Le système 40 est par exemple similaire au système 10 de la figure 1 ou au système 30 de la figure 3. Ainsi, le système 40 comprend les ensembles 12 et 14 et les circuits C1 à C6 et C1' à C6'. Le système 40 comprend en outre par exemple les circuits 130, 131, 130', 131', 140, 142, 144, 146, 148, 150, 152, ou 330, 331, 330', 331', mais qui ne sont pas représentés en figure 4.

Dans l'exemple représenté, le circuit C1 comprend par exemple des sous-circuits, ou blocs fonctionnels, 28, le circuit C2 comprend par exemple des sous-circuits 30, le circuit C3 comprend par exemple des sous-circuits 27, le circuit C4 comprend par exemple des sous-circuits 29, le circuit C5 comprend par exemple des sous-circuits 26, et le circuit C6 comprend par exemple des sous-circuits 25.

Dans l'exemple représenté, le circuit C'1 comprend par exemple des sous-circuits, ou blocs fonctionnels, 28', le circuit C2' comprend par exemple des sous-circuits 30', le circuit C3' comprend par exemple des sous-circuits 27', le circuit C4' comprend par exemple des sous-circuits 29', le circuit C5' comprend par exemple des sous-circuits 26', et le circuit C6' comprend par exemple des sous-circuits 25'.

Dans l'exemple de la figure 4, chacun des circuits C1 à C6 ou C1' à C6' comprend huit sous-circuits. En pratique, les circuits des ensembles 12 et 14 peuvent avoir chacun un nombre quelconque de sous-circuits, de préférence au moins deux sous-circuits. Les sous-circuits d'un même circuit sont par exemple capables de fonctionner indépendamment les uns des autres. Pour des raisons de clarté, dans la figure 4, un seul sous-circuit 28 du circuit C1 est représenté ainsi qu'un seul sous-circuit 28' du circuit C1'.

Les fonctions des sous-circuits sont par exemple des contrôles d'accès en lecture, et/ou en écriture, et/ou en récupération d'accès. D'autres fonctions mettent en œuvre des ponts de type APHB vers APB, pour la traduction du protocole de type AHB vers un protocole de type APB. Des décodeurs APB sont par exemple également mis en œuvre pour générer les signaux de sélection des périphériques de type APB. Ces fonctions sont par exemple mises en œuvre par les sous-circuits du circuit C2.

Chaque sous-circuit est par exemple configuré pour recevoir au moins une entrée non représentée. Chaque sous circuit est par exemple configuré pour fournir au moins une sortie. Les sorties de chaque circuit C1 à C6, ou C'1 à C6' sont par exemple générées par une partie des sous-circuits du circuit.

Dans certains cas, certains des sous-circuits de l'ensemble 12 ne sont pas impliqués dans la génération de signaux utilisés par les circuits 140, 142, 144, 146, 148, 150, 152. Il devient alors possible d'économiser de l'énergie en désactivant les sous-circuits correspondant de l'ensemble 14 concernés.

Dans l'exemple de la figure 4, au moins un paramètre est assigné à chaque sous-circuit. Pour le circuit C1, le paramètre est appelé C1_para_main, et pour le circuit C1', le paramètre est appelé C1'_para_rep. De plus, au moins un multiplexeur supplémentaire est ajouté pour chaque sous-circuit dans l'ensemble 12 et l'ensemble 14.

Dans l'exemple illustré, une sortie du sous-circuit 28 est reliée à une entrée appelée « 1 » d'un multiplexeur 430 qui est par exemple similaire au multiplexeur 330. Une entrée appelée « 0 » du multiplexeur 430 est mise par exemple à zéro ou à la masse ou à l'état bas. La sortie du sous-circuit est également reliée à une entrée appelée « 0 » d'un multiplexeur 430', par exemple similaire au multiplexeur 330' de l'ensemble 14. Le multiplexeur 430 est commandé par l'état ou la valeur du paramètre C1_para_main. Lorsque le paramètre C1_para_main=1, alors l'entrée « 1 » est du multiplexeur 430 est sélectionnée. Lorsque le paramètre C1_para_main=0, alors l'entrée « 0 » du multiplexeur 430 est sélectionnée. La sortie du multiplexeur 430 (signal DATA_TO_COMP) est par exemple envoyée à l'un des circuits 140, 142, 144, 146, 148, 150, 152.

Dans l'exemple illustré, une sortie du sous-circuit 28' est reliée à une entrée appelée « 1 » du multiplexeur 430'. Le multiplexeur 430' est commandé par l'état ou la valeur du paramètre C1'_para_rep. Lorsque le paramètre C1'_para_rep=1, alors l'entrée « 1 » est du multiplexeur 430' est sélectionnée. Lorsque le paramètre C1_para_rep=0, alors l'entrée « 0 » du multiplexeur 430 est sélectionnée. La sortie du multiplexeur 430' (signal DATA_TO_COMP) est par exemple envoyée vers l'un des comparateurs 140, 142, 144, 146, 148, 150, 152.

Lorsque C1_para_main=1 et C1'_para_rep=0, c'est-à-dire lorsqu'ils sont C1_para_main et C1_para_rep sont dans des états différents, cela entraîne que le sous-circuit 28' puisse être désactivé puisque la sortie du sous-circuit 28 (DATA_TO_COMP) se retrouve à la sortie du multiplexeur 430, et également en sortie du multiplexeur 430'. Le sous-circuit 28' devient ainsi transparent vis-à-vis des comparateurs 140, 142, 144, 146, 148, 150, 152, et peut donc être désactivé. Par désactivé on entend que le sous-circuit 28' est par exemple non alimenté.

Un avantage du mode de réalisation de la figure 4 est que la désactivation des sous-circuits ne participant pas à la génération des sorties comparées diminue la consommation de puissance.

Divers modes de réalisation et variantes ont été décrits. La personne du métier comprendra que certaines caractéristiques de ces divers modes de réalisation et variantes pourraient être combinées, et d'autres variantes apparaîtront à la personne du métier. En particulier, les modes de réalisation des figures 3 et 4 peuvent être combinés pour à la fois désactiver les multiplexeurs 330, 331' et à la fois désactiver certains sous-circuits de l'ensemble 14.

Enfin, la mise en œuvre pratique des modes de réalisation et variantes décrits est à la portée de la personne du métier à partir des indications fonctionnelles données ci-dessus. En particulier, des multiplexeurs similaires aux multiplexeurs 430 et 430' peuvent être ajoutés pour chaque sous-circuit de chacun des circuits C1 à C6 et C1' à C'6. Dans un exemple, les multiplexeurs 130, 131, 130', 130', 330, 330', 331, 331' peuvent être intégrés dans un ou plusieurs des circuits ou sous-circuits.

## Revendications

1. Système comprenant un ensemble principal (12) de circuits (C1, C2, C3, C4, C5, C6) et un ensemble auxiliaire (14) de circuits (C1', C2', C3', C4', C5', C6'), les ensembles principal (12) et auxiliaire (14) comprenant les mêmes circuits, chaque circuit de l'ensemble principal étant configuré pour fournir au moins un signal de sortie (S1, S5, S51, S6, S12, S13) destiné à être comparé à un signal de sortie (S1', S5', S51', S6', S12', S13') équivalent généré par un circuit de l'ensemble auxiliaire, au moins un circuit (C1, C2, C3, C4, C5, C6) de l'ensemble auxiliaire (14) comprenant un bloc fonctionnel (25', 26', 27', 28', 29', 30'), équivalent à un bloc fonctionnel de l'ensemble principal (12), désactivé ;
ledit bloc fonctionnel désactivé ne participant pas à la génération des signaux de sortie de l'ensemble auxiliaire (14) destinés à être comparés à des signaux de l'ensemble principal (12).

2. Système selon la revendication 1, dans lequel l'ensemble auxiliaire (14) ne comprend aucun bloc fonctionnel ne participant pas à la génération des signaux de sortie de l'ensemble auxiliaire (14) destinés à être comparés à des signaux de l'ensemble principal (12).

3. Système selon la revendication 1 ou 2, dans lequel chaque ensemble de circuits est un sous-système à unité centrale de traitement.

4. Système selon la revendication 3, dans lequel chaque sous-système comprend un circuit formant une unité centrale de traitement, au moins un circuit de mémoire volatile, au moins un circuit de mémoire non volatile, une unité de gestion des mémoires, ou au moins un bus reliant les différents circuits et un circuit de décodage du bus.

5. Système selon l'une quelconque des revendications 1 à 4, dans lequel chaque circuit (C1, C2, C3, C4, C5, C6) de l'ensemble principal (12) comprend au moins deux blocs fonctionnels (28).

6. Système selon l'une quelconque des revendications 1 à 3, dans lequel au moins une entrée (E1') de l'ensemble auxiliaire (14), ne participant pas à la génération des signaux de sortie de l'ensemble auxiliaire (14) destinés à être comparés à des signaux de l'ensemble principal (12), est maintenue à une valeur constante.

7. Système selon l'une quelconque des revendications 1 à 6, dans lequel toutes les entrées (E1', E2', E3', E4') de l'ensemble auxiliaire (14) ne participant pas à la génération des signaux de sortie de l'ensemble auxiliaire destinés à être comparés à des signaux de l'ensemble principal sont maintenues à une valeur constante.

8. Système selon l'une quelconque des revendications 1 à 7, dans lequel les circuits (C1, C2, C3, C4, C5, C6) de l'ensemble principal (12) sont situés les uns à côté des autres sur un circuit intégré et les circuits de l'ensemble auxiliaire (14) sont situés les uns à côté des autres sur ledit circuit intégré.

9. Système selon l'une quelconque des revendications 1 à 8, dans lequel la distance minimale entre un circuit (C1, C2, C3, C4, C5, C6) de l'ensemble principal (12) et le circuit équivalent (C1', C2', C3', C4', C5', C6') de l'ensemble auxiliaire (14) est de 50 µm.

10. Système selon l'une quelconque des revendications 1 à 9, dans lequel la distance minimale entre les circuits (C1, C2, C3, C4, C5, C6) de l'ensemble principal (12) et les circuits (C1', C2', C3', C4', C5', C6') de l'ensemble auxiliaire (14) est de 50 µm.

11. Système selon l'une quelconque des revendications 1 à 10, dans lequel l'ensemble principal (12) comprend un premier et un deuxième multiplexeurs (130, 330, 131, 331), et l'ensemble auxiliaire (14) comprend un troisième et un quatrième multiplexeurs (130', 131', 330', 331') ;
une sortie du premier multiplexeur (130, 131) étant reliée à une première entrée (1) du deuxième multiplexeur (330, 331) et à une première entrée (0) du quatrième multiplexeur (330', 331') ;
une sortie du deuxième multiplexeur (330, 331) étant reliée à au moins un circuit (C1, C2, C3, C4, C5, C6) de l'ensemble principal (12) ;
une sortie du quatrième multiplexeur (330', 331') étant reliée à au moins un circuit (C1', C2', C3', C4', C5', C6') de l'ensemble auxiliaire (14) ;
une deuxième entrée (1) du quatrième multiplexeur (330', 331') étant reliée à une sortie du troisième multiplexeur (130', 131') ;
le deuxième multiplexeur (330, 331) étant commandé par un premier signal (Gen_para_main), et le quatrième multiplexeur (330', 331') étant commandé par un deuxième signal (Gen_para_rep), les premiers et deuxièmes signaux étant configurés pour avoir des états complémentaires ;
la première entrée (1) du deuxième multiplexeur (330, 331) étant sélectionnée lorsque le premier signal (Gen_para_main) est dans un premier état (1) ;
la première entrée (0) du quatrième multiplexeur (330', 331') étant sélectionnée lorsque le deuxième signal (Gen_para_rep) est dans un deuxième état (0) complémentaire du premier état.

12. Système selon la revendication 11, dans lequel des entrées (E1', E2', E3', E4') du troisième multiplexeur (130', 131') sont configurées pour recevoir une valeur constante.

13. Système selon la revendication 11 ou 12, dans lequel des entrées du premier multiplexeur (130, 131) sont reliées à des périphériques (152, 154, 156, 158) du système (30, 40) reliés à au moins un des circuits (C1, C2, C3, C4, C5, C6) de l'ensemble principal (12).

14. Système selon l'une quelconque des revendications 1 à 13, dans lequel les circuits (C1, C2, C3, C4, C5 ,C6) de l'ensemble principal (12) comprennent des blocs fonctionnels (25, 26, 27, 28, 29, 30), et les circuits (C1', C2', C3', C4', C5', C6') de l'ensemble auxiliaire (14) comprennent des blocs fonctionnels (25', 26', 27', 28', 29', 30') équivalents à ceux de l'ensemble principal (12) ;
au moins un premier bloc fonctionnel (28) d'un des circuits (C1, C2, C3, C4, C5 ,C6) de l'ensemble principal (12) ayant une sortie reliée à une première entrée (1) d'un cinquième multiplexeur (430) de l'ensemble principal et à une première entrée (0) d'un sixième multiplexeur (430') de l'ensemble auxiliaire (14) ;
la première entrée (1) du cinquième multiplexeur (430) étant sélectionnée lorsqu'un troisième signal (C1_para_main) est dans un premier état (1) ;
la première entrée (0) du sixième multiplexeur (430') étant sélectionnée lorsqu'un quatrième signal (C1' _para_rep) est dans un deuxième état (0), complémentaire du premier état.

15. Système selon la revendication 14, dans lequel une deuxième entrée (1) du sixième multiplexeur (430') est sélectionnée lorsque le quatrième signal (C1'_para_rep) est dans le premier état (1) ;
un deuxième bloc fonctionnel (28') de l'ensemble auxiliaire (14), équivalent au premier bloc fonctionnel (28), étant désactivé.
